# EUROPÄISCHE PATENTANMELDUNG

(11) **EP 4 006 241 A1**
(43) Veröffentlichungstag der Anmeldung: **01.06.2022**
(21) Anmeldenummer: 21210511.8
(22) Anmeldetag: 25.11.2021
(51) Int. Cl.: E03C 1/06, F16B 7/04

(54) **STANGENMONTIERBARE HALTEVORRICHTUNG UND SANITÄRE HANDBRAUSENHALTEEINRICHTUNG**

(30) Priorität: 30.11.2020 DE 102020215084
(71) Anmelder: Hansgrohe SE, 77761 Schiltach (DE)
(72) Erfinder: Söll, Jörg, 78727 Oberndorf (DE); Herzog, Uwe, 77866 Rheinau/Diersheim (DE)
(74) Vertreter: Patentanwälte Ruff, Wilhelm, Beier, Dauster & Partner mbB

(57) **Zusammenfassung**

Eine stangenmontierbare Haltevorrichtung mit

- einem Stangenkoppelteil (1), das zum verschieblichen Anbringen an einer Stange eingerichtet ist und einen Grundkörper (2) sowie eine zwischen einer Stangenklemmposition (3k) und einer Stangenfreigabeposition am Grundkörper beweglich geführte Klemmeinheit (3) aufweist,

- einer Bedieneinheit (4) zum nutzerbetätigten Bewegen der Klemmeinheit zwischen ihrer Stangenklemmposition und ihrer Stangenfreigabeposition und

- einem Objekthalteteil (5), das mindestens zwischen einer ersten Drehstellung (5₁) und einer zweiten Drehstellung drehbeweglich mit dem Stangenkoppelteil verbunden ist,
Die Bedieneinheit (4) ist am Objekthalteteil (5) angeordnet und dafür eingerichtet, die Klemmeinheit (3) sowohl bei in seiner ersten Drehstellung (5₁)befindlichem Objekthalteteil als auch bei in seiner zweiten Drehstellung befindlichem Objekthalteteil nutzerbetätigt zwischen ihrer Stangenklemmposition (3k) und ihrer Stangenfreigabeposition zu bewegen.

Verwendung z.B. für sanitäre Duschsysteme mit Handbrause.

## Beschreibung

Die Erfindung bezieht sich auf eine stangenmontierbare Haltevorrichtung, die einen Stangenkoppelteil, der zum Anbringen an einer Stange eingerichtet ist und einen Grundkörper sowie eine zwischen einer Stangenklemmposition und einer Stangenfreigabeposition am Grundkörper beweglich geführte Klemmeinheit aufweist, eine Bedieneinheit zum nutzerbetätigten Bewegen der Klemmeinheit zwischen ihrer Stangenklemmposition und ihrer Stangenfreigabeposition und einen Objekthalteteil umfasst, der mindestens zwischen einer ersten Drehstellung und einer zweiten Drehstellung drehbeweglich mit dem Stangenkoppelteil verbunden ist, sowie auf eine mit einer solchen Haltevorrichtung ausgerüstete sanitäre Handbrausenhalteeinrichtung.

Eine solche Haltevorrichtung kann mittels ihres Stangenkoppelteils an einer Stange festgelegt werden, während sie mittels ihres Objekthalteteils dazu bestimmt ist, ein Objekt, d.h. einen Gegenstand, zu halten. Mit anderen Worten fungiert die Haltevorrichtung als eigenständiges Mittel bzw. Bindeglied zum Anbringen des betreffenden Objektes bzw. Gegenstands an der Stange. In vielen Anwendungsfällen ist die Haltevorrichtung dafür eingerichtet, längs der Stange verschieblich an selbiger montiert zu werden, was bedeutet, dass dementsprechend das von ihr gehaltene Objekt längs der Stange verschoben werden kann. In alternativen Ausführungen wird die Haltevorrichtung unbeweglich oder jedenfalls ohne die Möglichkeit einer Verschiebung längs der Stange an der Stange montiert.

Die Eigenschaft der Stangenmontierbarkeit bedeutet für die Haltevorrichtung vorliegend, dass sie zum Montieren an einer Stange eingerichtet ist, d.h. mit entsprechenden Mitteln ausgerüstet ist, um die Haltevorrichtung an einer Stange montieren zu können. Bei der Stange kann es sich um eine solche beliebiger Art handeln, insbesondere, aber nicht ausschließlich, um eine wandmontierbare Stange, wie eine sanitäre Brausestange z.B. für eine Handbrause. Im letztgenannten Fall ist das von der Haltevorrichtung an ihrem Objekthalteteil gehaltene Objekt ein Handbrausenkörper. In anderen sanitären Wandstangenanwendungen kann als Objekt z.B. eine Ablage für Seife etc. von der Haltevorrichtung an der Stange gehalten werden. Die Haltevorrichtung kann darüber hinaus auch für beliebige andere, auch nicht-sanitäre Einsatzzwecke verwendet werden, bei denen ein Objekt an einer Stange montiert werden soll, insbesondere derart, dass die Haltevorrichtung samt daran gehaltenem Objekt längs der Stange verschoben werden kann.

Das Montieren der Haltevorrichtung an der Stange erfolgt durch ein klemmendes Festhalten mittels der Klemmeinheit, wozu letztere von ihrer Stangenfreigabeposition in ihre Stangenklemmposition verbracht wird. Wenn die Haltevorrichtung an der Stange montiert ist und längs der Stange verschoben oder von der Stange abgenommen werden soll, gibt die Klemmeinheit diese Verschiebebewegung bzw. diesen Demontagevorgang dadurch frei, dass sie von ihrer Stangenklemmposition in ihre Stangenfreigabeposition verbracht wird. Über die Bedieneinheit kann der Benutzer die Klemmeinheit entsprechend betätigen. Meist wird dabei die Klemmeinheit elastisch rückstellend in ihre Stangenklemmposition vorgespannt angeordnet, so dass der Benutzer sie durch Betätigen der Bedieneinheit unter Überwindung der Vorspannkraft in die Stangenfreigabeposition verbringen kann, aus der sie dann selbsttätig in ihre Stangenklemmposition zurückkehrt, sobald der Benutzer die Bedieneinheit nicht mehr betätigt. Die Stange kann einen beliebigen Querschnitt aufweisen, z.B. einen kreisrunden, ovalen, polygonalen oder trapezförmigen Querschnitt, wobei es sich versteht, dass die Klemmeinheit und der Stangenhalteteil geeignet an den Querschnitt der Stange, an der die Haltevorrichtung montiert werden soll, angepasst gebildet sind.

Diverse herkömmliche stangenmontierbare Halterungen mit einer solchen Klemmtechnik sind, insbesondere in Form von Handbrausenhalterungen, beispielsweise in den Patentschriften EP 0 965 699 B1, DE 23 42 613 B2, EP 2 703 569 B1, EP 0 733 747 B1 und US 8.448.270 B2, in den Offenlegungsschriften DE 103 03 169 A1, EP 1 921 214 A1, WO 2011/088763 A1, US 2015/0233101 A1, JP 2008-184765 A, DE 197 05 285 A1 und DE 10 2010 063 968 A1 sowie in der Gebrauchsmusterschrift DE 20 2004 006 168 U1 offenbart.

Bei gattungsgemäßen Haltevorrichtungen, d.h. solchen der eingangs genannten Art, ist das Objekthalteteil mindestens zwischen zwei unterschiedlichen Drehstellungen drehbeweglich mit dem Stangenkoppelteil verbunden. Dies ermöglicht es dem Benutzer, das Objekthalteteil, wie z.B. ein Handbrausenhalteteil, bei Bedarf verdrehen zu können, um den daran zu haltenden Gegenstand, wie z.B. einen Handbrausenkörper, in eine andere Orientierung gegenüber der Stange zu bringen. Herkömmlicherweise ist insbesondere auch bei Haltevorrichtungen dieses Typs die Bedieneinheit, über die der Benutzer die Klemmeinheit betätigen kann, am Stangenkoppelteil angeordnet. Derartige Haltevorrichtungen sind in den Offenlegungsschriften DE 10 2015 226 624 A1 und DE 10 2018 209 985 A1 offenbart.

Der Erfindung liegt als technisches Problem die Bereitstellung einer stangenmontierbaren Haltevorrichtung der eingangs genannten Art, die gegenüber den oben erwähnten herkömmlichen Haltevorrichtungen Vorteile insbesondere hinsichtlich Funktionalität, Bedienkomfort und/oder Fertigungsaufwand bietet, sowie einer mit einer solchen Haltevorrichtung ausgerüsteten sanitären Handbrausenhalteeinrichtung zugrunde.

Die Erfindung löst dieses Problem durch die Bereitstellung einer stangenmontierbaren Haltevorrichtung mit den Merkmalen des Anspruchs 1 und einer sanitären Handbrausenhalteeinrichtung mit den Merkmalen des Anspruchs 11. Vorteilhafte Weiterbildungen der Erfindung, die zur Lösung dieses und weiterer Probleme beitragen, sind in den Unteransprüchen angegeben, deren Inhalt einschließlich sämtlicher sich durch die Anspruchsrückbezüge ergebender Merkmalskombinationen hiermit vollumfänglich durch Verweis zum Inhalt der Beschreibung gemacht wird.

Erfindungsgemäß ist die Bedieneinheit am Objekthalteteil angeordnet und dafür eingerichtet, die Klemmeinheit sowohl bei in seiner ersten Drehstellung befindlichem Objekthalteteil als auch bei in seiner zweiten Drehstellung befindlichem Objekthalteteil nutzerbetätigt zwischen ihrer Stangenklemmposition und ihrer Stangenfreigabeposition zu bewegen.

Die erfindungsgemäße stangenmontierbare Haltevorrichtung bietet Vorteile gegenüber dem oben erwähnten Stand der Technik insbesondere hinsichtlich Funktionalität, Bedienkomfort und/oder Fertigungsaufwand. So kann für die Fertigung der Haltevorrichtung die Auslegung Ihres Haltestangenteils weitestgehend unabhängig von der am Objekthalteteil angeordneten Bedieneinheit erfolgen. Des Weiteren ist die Bedieneinheit durch ihre Positionierung am Objekthalteteil für den Benutzer problemlos zugänglich, wenn er die Klemmeinheit betätigen will, um die Haltevorrichtung von der Stange zu lösen oder längs der Stange zu verschieben. Denn der Objekthalteteil ist in der Regel schon deshalb für den Benutzer gut zugänglich, weil dem Benutzer ein problemloses Abnehmen und Wiederanbringen des von der Haltevorrichtung am Objekthalteteil gehaltenen Objektes bei an der Stange montierter Haltevorrichtung ermöglicht werden soll.

Da die Bedieneinheit sowohl in der ersten als auch in der zweiten Drehstellung des Objekthalteteils die Klemmeinheit zwischen ihrer Stangenklemmposition und ihrer Stangenfreigabeposition bewegen kann, kann der Benutzer in beiden Situationen die Klemmeinheit zum Lösen bzw. Wiederherstellung der Klemmung der Haltevorrichtung an der Stange betätigen. Dies ermöglicht einen sehr flexiblen Einsatz der Haltevorrichtung in zwei oder mehr Drehstellungen seines Objekthalteteils relativ zu seinem Stangenkoppelteil und damit in unterschiedlichen Orientierungen seines Objekthalteteils relativ zur Stange unter vollständiger Beibehaltung der Bedienfunktionalität zum Klemmen und Lösen der Haltevorrichtung an bzw. von der jeweiligen Stange.

Die Klemmung der Haltevorrichtung an der Stange kann je nach Bedarf und Anwendungsfall durch ein formschlüssiges und/oder kraftschlüssiges Zusammenwirken entsprechender Klemmkontaktflächen an der Klemmeinheit einerseits und der Stange andererseits bereitgestellt oder jedenfalls unterstützt werden. Des Weiteren kann die Klemmeinheit bei Bedarf durch ein zugeordnetes Vorspannelement, wie eine Vorspannfeder, in ihre Stangenklemmposition vorgespannt am Stangenkoppelteil geführt sein.

In einer Weiterbildung der Erfindung haben die erste und die zweite Drehstellung des Objekthalteteils einen Drehwinkelabstand von mindestens 90° voneinander. Dies ermöglicht die Verwendung der Haltevorrichtung in entsprechend unterschiedlichen Drehstellungen seines Objekthalteteils relativ zu seinem Stangenhalteteil. Je nach Bedarf und Anwendungsfall kann das Objekthalteteil wahlweise nur in der ersten oder in der zweiten Drehstellung gegenüber dem Objekthalteteil oder alternativ zusätzlich auch in einer oder mehreren Zwischenstellungen positioniert werden.

Der maximale Drehwinkelabstand der verschiedenen einstellbaren Drehstellungen des Objekthalteteils gegenüber dem Stangenhalteteil beträgt in diesen Ausführungen der Erfindung mindestens 90° und kann je nach Bedarf oder Anwendungsfall beliebig größer gewählt sein, z.B. mindestens 180° oder 270°, wobei im Extremfall auch eine umlaufende Drehverstellbeweglichkeit des Objekthalteteils gegenüber dem Stangenhalteteil ohne Winkelbeschränkung vorgesehen sein kann. Eine Positionierung des Objekthalteteils wahlweise in einer von zwei um 90° verschiedenen Drehstellungen gegenüber dem Stangenhalteteil ermöglicht beispielsweise in Anwendung der Haltevorrichtung als Handbrausenhalterung das Anklemmen der Haltevorrichtung wahlweise an einer vertikalen oder einer horizontalen Brausestange mit in den beiden Fällen räumlich um 90° versetzt orientiertem Stangenhalteteil bei gleichbleibender räumlicher Orientierung des Objekthalteteils z.B. derart, dass in beiden Fällen ein Handbrausenkörper als Objekt von oben in das Objekthalteteil haltend eingefügt werden kann. In alternativen Ausführungen beträgt der Drehwinkelabstand der beiden Enddrehstellungen des Objekthalteteils weniger als 90°, z.B. höchstens 45° oder höchstens 30°. Dies kann z.B. für Anwendungsfälle genügen, bei denen eine solche begrenzte Lageorientierung eines an einer Stange zu haltenden Objekts ausreicht oder bei denen eine wahlweise Montage der Haltevorrichtung nur an Stangen mit im Wesentlichen gleicher oder nur relativ geringfügig abweichender räumlicher Lage beabsichtigt ist.

In einer Weiterbildung der Erfindung ist die Bewegung der Klemmeinheit zwischen ihrer Stangenklemmposition und ihrer Stangenfreigabeposition eine lineare Klemmeinheit-Translationsbewegung, die bezüglich einer Stangenaufnahme-Längsrichtung des Stangenkoppelteils mit senkrechter Hauptrichtungskomponente verläuft. Dies ermöglicht eine konstruktiv vorteilhafte und einfache Auslegung der Klemmeinheit als einem linear translationsbeweglich am Stangenkoppelteil geführtes Bauteil. Die Translationsbewegung der Klemmeinheit verläuft hierbei mit einer Majoritätsrichtungskomponente senkrecht und damit allenfalls mit einer Minoritätsrichtungskomponente parallel zu einer Längsrichtung einer am Stangenkoppelteil ausgebildeten Aufnahme für eine Stange, an der die Haltevorrichtung montierbar ist.

In Fällen, in denen eine Verschiebbarkeit der Haltevorrichtung längs der Stange gegeben ist, erfolgt diese Verschiebebewegung in dieser Längsrichtung der Stangenaufnahme, und dementsprechend ist die Bewegung der Klemmeinheit zum Herstellen bzw. Lösen der Klemmverbindung der Haltevorrichtung an der Stange zumindest überwiegend senkrecht zur Verschiebungsrichtung der Haltevorrichtung an der Stange orientiert. Dies stellt eine in aller Regel günstige Bewegungskinematik für die Klemmeinheit einerseits und die Verschiebung der Haltevorrichtung an der Stange andererseits dar. Im Spezialfall senkrechter Orientierung verläuft die Translationsbewegung der Klemmeinheit senkrecht zur Verschiebungsrichtung der Haltevorrichtung an der Stange, wobei diese Verschiebungsrichtung üblicherweise durch eine Längsachsenrichtung der Stange gegeben ist. In alternativen Ausführungen kann z.B. eine Drehbewegung für die Klemmeinheit vorgesehen sein, oder die lineare Translationsbewegung der Klemmeinheit verläuft im Wesentlichen parallel zur Stangenaufnahme-Längsrichtung des Stangenkoppelteils.

In einer Weiterbildung der Erfindung ist die Bewegung der Klemmeinheit zwischen ihrer Stangenklemmposition und ihrer Stangenfreigabeposition eine lineare Klemmeinheit-Translationsbewegung, die bezüglich einer Drehachse des Objekthalteteils mit paralleler Hauptrichtungskomponente verläuft. Die Wahl der linearen Translationsbewegung für die Klemmeinheit hat die bereits vorstehend erwähnten Vorteile. Der zur Drehachse des Objekthalteteils parallele oder jedenfalls überwiegend parallele Verlauf der Translationsbewegung der Klemmeinheit stellt eine in vielen Fällen optimale Abstimmung der Bewegung der Klemmeinheit auf die Drehverstellbarkeit des Objekthalteteils dar. Die Klemmbewegung der Klemmeinheit erfolgt dadurch ganz oder im Wesentlichen in der Drehachsenrichtung des Objekthalteteils, was es z.B. einfach macht, unerwünschte Drehmomentbelastungen für das Objekthalteteil durch Klemmkräfte, die auf die Klemmeinheit wirken können, zu vermeiden. In alternativen Ausführungen kann z.B. eine Drehbewegung für die Klemmeinheit vorgesehen sein, oder die Translationsbewegung der Klemmeinheit verläuft im Wesentlichen in einer Ebene senkrecht zur Drehachse des Objekthalteteils.

In einer Ausgestaltung der Erfindung weist die Klemmeinheit zwei sich quer zur linearen Klemmeinheit-Translationsbewegung gegenüberliegende Klemmbacken auf, die zwischen sich eine Stangenaufnahme belassen, wobei eine an einander zugewandten Endbereichen der Klemmbacken durch deren Abstand voneinander definierte Weite der Stangenaufnahme in Richtung aus der Stangenaufnahme heraus abnimmt. Diese Ausführung der erfindungsgemäßen Haltevorrichtung stellt eine vorteilhafte Möglichkeit bereit, die Haltevorrichtung über ihren Stangenhalteteil und die an ihm geführte Klemmeinheit zuverlässig und einfach an der Stange zu halten, an der sie montiert wird.

Die Stange, an der die Haltevorrichtung montiert werden soll, kann in der zwischen den Klemmbacken belassenen Stangenaufnahme aufgenommen werden, wobei ihr Klemmbackenabstand die entsprechende Weite der Stangenaufnahme definiert. Indem durch die spezielle Klemmbackengestaltung deren Klemmbackenabstand an ihren einander zugewandten Endbereichen in Richtung aus der Stangenaufnahme heraus abnimmt, können sich dort die Klemmbacken zum Herstellen der Klemmverbindung von Haltevorrichtung und Stange zuverlässig sichernd klemmend gegen die Stange anlegen und dabei die Stange quasi etwas hintergreifen. Zum Lösen der Klemmverbindung genügt es, die Klemmbacken linear in Richtung aus der Stangenaufnahme heraus zu bewegen, ein zusätzliches Aufspreizen der Klemmbacken ist nicht zwingend erforderlich, wodurch auch die zum Lösen der Klemmverbindung benötigten Betätigungskräfte relativ gering gehalten werden können. In alternativen Ausführungen kann die Klemmeinheit von einer anderen, herkömmlichen Bauart sein, z.B. einer Bauart mit einer oder mehreren sich vollständig oder jedenfalls überwiegend um die Stangenaufnahme herum windenden Klemmfedern.

In einer Weiterbildung der Erfindung weist die Bedieneinheit mindestens ein Betätigungsglied auf, an das die Klemmeinheit über eine mechanische Kopplung gekoppelt ist und das am Objekthalteteil zwischen einer klemmaktiven Ruheposition, in der es die Klemmeinheit in ihrer Stangenklemmposition belässt, und einer klemmlösenden Betätigungsposition, in der es die Klemmeinheit in ihre Stangenfreigabeposition betätigt, beweglich geführt ist. Eine solche mechanische Ankopplung der Klemmeinheit an die Bedieneinheit erfordert relativ wenig Fertigungsaufwand und ist sehr funktions- und ausfallsicher. In alternativen Ausführungen kann die Klemmeinheit z.B. über herkömmliche elektrische und/oder hydraulische bzw. pneumatische Kopplungsmittel an die Bedieneinheit gekoppelt sein.

In einer Ausgestaltung der Erfindung ist das Betätigungsglied in einer linearen Translationsbewegung zwischen seiner klemmaktiven Ruheposition und seiner klemmlösenden Betätigungsposition beweglich, wobei die Betätigungsglied-Translationsbewegung bezüglich der Klemmeinheit-Translationsbewegung mit senkrechter Hauptrichtungskomponente verläuft und die mechanische Kopplung eine Schrägflächenkopplung mit einer Betätigungsglied-Koppelfläche am Betätigungsglied und einer mit dieser zusammenwirkenden Klemmeinheit-Koppelfläche an der Klemmeinheit beinhaltet, wobei die Betätigungsglied-Koppelfläche eine Betätigungsglied-Schrägfläche ist und/oder die Klemmeinheit-Koppelfläche eine Klemmeinheit-Schrägfläche ist. In alternativen Ausführungen kann z.B. eine Drehbewegung für die Klemmeinheit vorgesehen sein, oder die lineare Translationsbewegung der Klemmeinheit verläuft im Wesentlichen parallel zur Stangenaufnahme-Längsrichtung des Grundkörpers des Stangenkoppelteils.

Mit dem linear translationsbeweglichen Betätigungsglied besitzt die Bedieneinheit Vorteile hinsichtlich einfacher und zuverlässiger Funktionalität sowie geringem konstruktivem Aufwand, und die Realisierung der mechanischen Kopplung mit einer Schrägflächenkopplung zwischen Betätigungsglied einerseits und Klemmeinheit andererseits ist in gleicher Weise sowohl hinsichtlich einfacher und zuverlässiger Funktionalität als auch hinsichtlich Fertigungsaufwand vorteilhaft. Dabei kann die Schrägflächenkopplung je nach Bedarf und Anwendungsfall eine Schrägfläche nur am Betätigungsglied, eine Schrägfläche nur an der Klemmeinheit oder Schrägflächen an beiden Bauteilen umfassen. In den Fällen mit nur einer Schrägfläche kann diese z.B. mit einer Kantenfläche oder einer gekrümmten Fläche des anderen Bauteils als Kontaktfläche zusammenwirken. In alternativen Ausführungen ist für das Betätigungsglied z.B. eine Drehbewegung vorgesehen, und/oder die mechanische Kopplung zwischen Klemmeinheit und Betätigungsglied beinhaltet z.B. eine schrägflächenfreie Kulissenführung oder eine Hebelarmkopplung anstelle einer Schrägflächenkopplung.

In einer weiteren Ausgestaltung der Erfindung weist die Klemmeinheit-Koppelfläche mindestens einen ersten und einen zweiten Klemmeinheit-Koppelflächenabschnitt an der Klemmeinheit auf, wobei die Betätigungsglied-Koppelfläche in der ersten Drehstellung des Objekthalteteils mit dem ersten Klemmeinheit-Koppelflächenabschnitt zusammenwirkt und in der zweiten Drehstellung des Objekthalteteils mit dem zweiten Klemmeinheit-Koppelflächenabschnitt zusammenwirkt. Dies stellt eine funktionell und konstruktiv vorteilhafte Realisierung der Schrägflächenkopplung durch zusammenwirkende Koppelflächen am Betätigungsglied einerseits und an der Klemmeinheit andererseits dar. Da die Koppelflächen dergestalt ausgeführt sind, dass sie sowohl in der ersten als auch in der zweiten Drehstellung des Objekthalteteils zusammenwirken, ist die aktive Kopplung von Bedieneinheit und Klemmeinheit in beiden Drehstellungen des Objekthalteteils gegeben. In beiden Drehstellungen des Objekthalteteils kann der Benutzer daher bei Bedarf durch Betätigen der Bedieneinheit die Klemmung der Haltevorrichtung an einer Stange lösen bzw. wieder herstellen, obwohl die Lage, d.h. Orientierung, der am Objekthalteteil angeordneten Bedieneinheit und damit ihres Betätigungsglieds gegenüber der am Stangenkoppelteil geführten Klemmeinheit um den entsprechenden Drehwinkel zwischen diesen beiden Drehstellungen unterschiedlich ist. In alternativen Ausführungen kann z.B. vorgesehen sein, dass mit dem Betätigungsglied auch die Klemmeinheit in ihrer Orientierung am Stangenhalteteil verändert wird, indem sie entsprechend in den beiden unterschiedlichen Stellungen am Stangenhalteteil geführt angebracht wird oder zwischen diesen Stellungen verdrehbar am Stangenhalteteil geführt angeordnet ist.

In einer weiteren Ausgestaltung der Erfindung ist die Klemmeinheit-Schrägfläche um die Drehachse des Objekthalteteils umlaufend gebildet, wobei der erste und der zweite Klemmeinheit-Koppelflächenabschnitt einteiliger Bestandteil der umlaufenden Klemmeinheit-Schrägfläche sind. Dies stellt eine funktionell und fertigungstechnisch einfache und günstige Möglichkeit dar, die beiden Koppelflächenabschnitte der Klemmeinheit als Schrägflächenabschnitte bereitzustellen, mit denen die Koppelfläche des Betätigungsglieds in der jeweiligen Drehstellung des Objekthalteteils zusammenwirkt. In alternativen Ausführungen können die Koppelflächenabschnitte der Klemmeinheit z.B. als separate Flächenabschnitte der Klemmeinheit gebildet sein, sei es als jeweilige Schrägfläche oder als andersartige Koppelfläche.

In einer Ausgestaltung der Erfindung umfasst die Bedieneinheit mindestens zwei sich bezüglich der Drehachse des Objekthalteteils gegenüberliegende Betätigungsglieder und eine jeweils zugehörige Drucktaste, die mit dem zugeordneten Betätigungsglied einteilig ist oder mit diesem mechanisch starr gekoppelt ist. Dies stellt eine hinsichtlich Bedienfunktionalität und Bedienkomfort vorteilhafte Realisierung der Bedieneinheit dar. Die Klemmeinheit kann mit dieser Bedieneinheit vom Benutzer durch einfaches Drücken der beiden gegenüberliegenden Drucktasten aktiviert werden, und die Betätigungskräfte können über die Betätigungsglieder symmetrisch zur Drehachse des Objekthalteteils und damit entsprechend gleichmäßig auf die Klemmeinheit übertragen werden. Optional kann auch bereits die Druckbetätigung einer der beiden Drucktasten genügen. Die axiale Stirnseite des Objekthalteteils kann von Bedienelementen der Bedieneinheit frei bleiben und daher nach anderen Gesichtspunkten ausgelegt werden, z.B. nach rein gestalterischen Gesichtspunkten oder zum dortigen Ausbilden von Haltemitteln für das zu haltende Objekt. In alternativen Ausführungen kann die Bedieneinheit z.B. einen Drehknopf anstelle einer Drucktaste aufweisen, an den ein oder mehrere Betätigungsglieder geeignet angekoppelt sind, und/oder es ist nur eine einzige Drucktaste für die Bedieneinheit vorgesehen, die sich z.B. an einer Stirnseite des Objekthalteteils befinden kann.

In einer Weiterbildung der Erfindung weist die Haltevorrichtung eine Rastkopplung zwischen dem Objekthalteteil und dem Stangenkoppelteil auf, durch die der Objekthalteteil in der ersten und in der zweiten Drehstellung in Drehrichtung ausrastbar rastend mit dem Stangenkoppelteil gekoppelt ist. Dies stellt eine vorteilhafte Realisierung der Drehkopplung des Objekthalteteils an den Stangenkoppelteil dar. Die Rastkopplung sichert die Lage des Objekthalteteils in seiner ersten bzw. zweiten Drehstellung gegenüber dem Stangenkoppelteil derart, dass ein Verlassen dieser Drehstellung durch das Objekthalteteil nur unter Aufwendung der benötigten Ausrastkraft möglich ist. Dies vermeidet ein versehentliches Wegdrehen des Objekthalteteils aus der betreffenden Drehstellung, ermöglicht es jedoch dem Benutzer bei Bedarf, das Objekthalteteil gegenüber dem Stangenkoppelteil unter Überwindung der Ausrastkraft zu verdrehen, beispielsweise um das Objekthalteteil nach einer anders orientierten Montage der Haltevorrichtung mit seinem Stangenkoppelteil an der gleichen oder einer anderen Stange neu im Raum auszurichten oder bei unveränderter Lage der Haltevorrichtung mit seinem Stangenkoppelteil an der Stange das Objekthalteteil mit einem daran gehaltenen Objekt neu im Raum auszurichten, z.B. von einer vertikalen Position in eine zur Vertikalen geneigte Position. In alternativen Ausführungen wird für die Drehkopplung des Objekthalteteils gegenüber dem Stangenkoppelteil auf eine Rastung verzichtet, und es kann stattdessen z.B. eine lagesichernde Klemmung vorgesehen sein, durch welche der Objekthalteteil in seiner jeweiligen Drehstellung gegenüber dem Stangenkoppelteil lösbar geklemmt gehalten ist.

Die erfindungsgemäße sanitäre Handbrausenhalteeinrichtung beinhaltet eine wandmontierbare sanitäre Brausestange und eine an der Brausestange verschieblich montierbare erfindungsgemäße Haltevorrichtung, wobei das Objekthalteteil der Haltevorrichtung eine Handbrausenaufnahmeöffnung zum haltenden Einsetzen eines Halteabschnitts einer sanitären Handbrause aufweist. Dies stellt eine vorteilhafte Verwendung der erfindungsgemäßen Haltevorrichtung zur variablen Halterung eines Handbrausenkörpers an einer Brausestange dar, wobei z.B. ein Halten des Handbrausenkörpers in gleicher räumlicher Orientierung wahlweise sowohl an einer vertikal orientierten Brausestange als auch an einer horizontal orientierten Brausestange ermöglicht wird, wenn eine Haltevorrichtung verwendet wird, bei der die beiden zugehörigen Drehstellungen des Objekthalteteils einen entsprechenden Drehwinkelabstand von 90° voneinander haben.

Eine vorteilhafte Ausführungsform der Erfindung ist in den Zeichnungen dargestellt. Diese und weitere Ausführungsformen der Erfindung werden nachfolgend näher erläutert. Hierbei zeigen:
- Fig. 1: eine Perspektivansicht einer stangenmontierbaren Haltevorrichtung in einer ersten Montagelage an einer vertikal orientierten Stange,
- Fig. 2: eine perspektivische Schnittansicht der Haltevorrichtung in stangenmontierter Lage gemäß Fig. 1 in schräg seitlicher Darstellung,
- Fig. 3: eine perspektivische Schnittansicht der Haltevorrichtung in stangenmontierter Lage gemäß Fig. 1 in frontaler Darstellung,
- Fig. 4: eine Perspektivansicht der Haltevorrichtung in einer zweiten Montagelage an einer horizontal orientierten Stange,
- Fig. 5: eine Perspektivansicht eines Stangenkoppelteils der stangenmontierten Haltevorrichtung,
- Fig. 6: eine Schnittansicht einer Klemmeinheit und einer Bedieneinheit der stangenmontierten Haltevorrichtung in stangenmontierter Lage,

- Fig. 7: eine Perspektivansicht eines Objekthalteteils der Haltevorrichtung und
- Fig. 8: eine Perspektivansicht der Bedieneinheit und der Klemmeinheit der Haltevorrichtung.

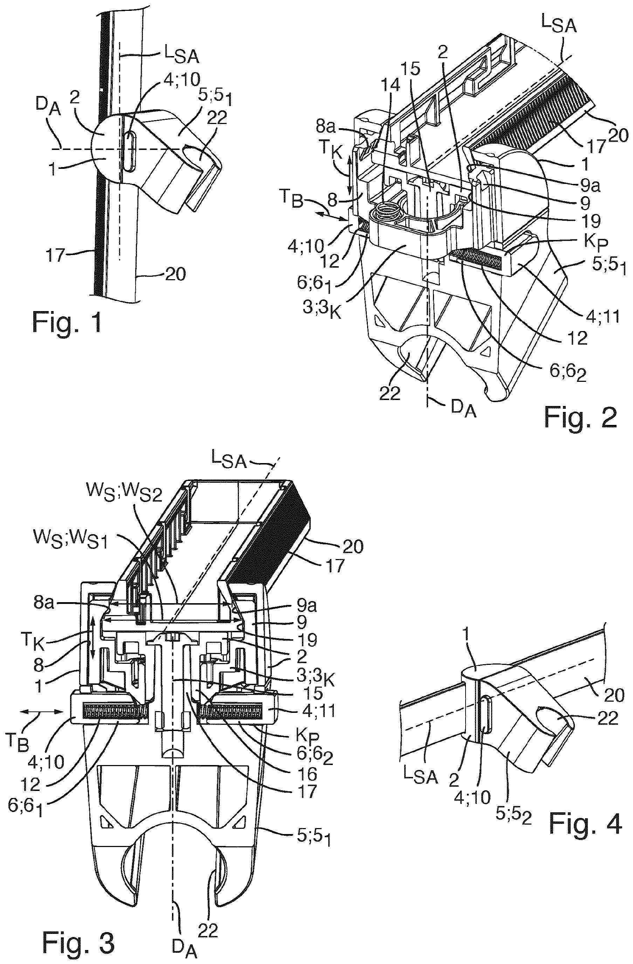

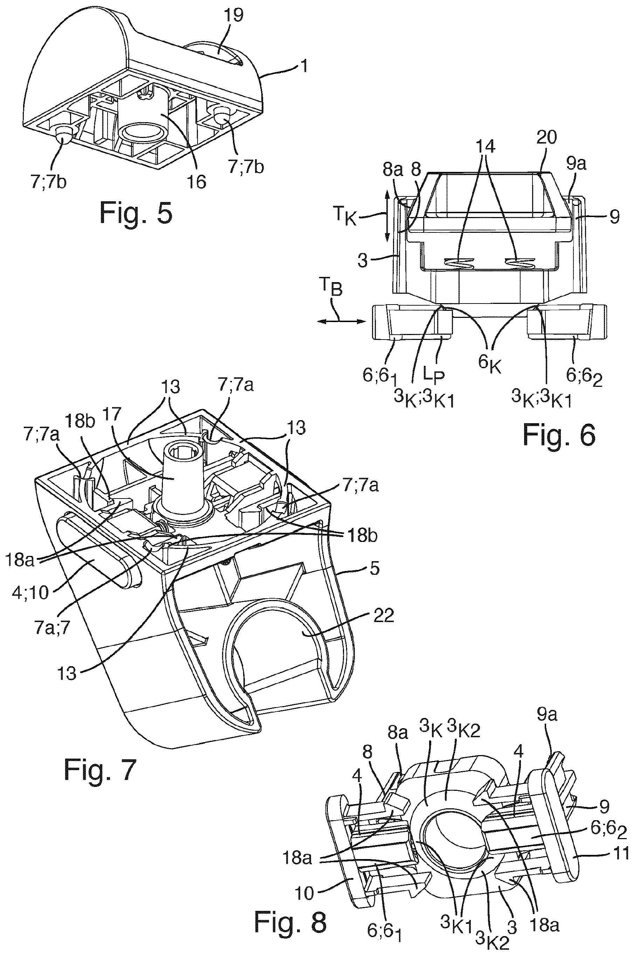

Wie anhand des in den Figuren exemplarisch gezeigten Ausführungsbeispiels deutlich wird, umfasst die erfindungsgemäße stangenmontierbare Haltevorrichtung als Bestandteile insbesondere einen Stangenkoppelteil 1, der einen Grundkörper 2 und eine Klemmeinheit 3 beinhaltet, eine Bedieneinheit 4 und einen Objekthalteteil 5, der mindestens zwischen einer ersten Drehstellung 5₁, wie in Fig. 1 gezeigt, und einer zweiten Drehstellung 5₂, wie in Fig. 4 gezeigt, drehbeweglich mit dem Stangenkoppelteil 1 verbunden ist. Mit dem Grundkörper 2 und der Klemmeinheit 3 ist der Stangenkoppelteil 1 der Haltevorrichtung zum Anbringen an einer Stange eingerichtet, wozu die Klemmeinheit 3 zwischen einer Stangenklemmposition 3k und einer nicht explizit gezeigten Stangenfreigabeposition am Grundkörper 2 beweglich geführt ist. Vorzugsweise ist die Klemmeinheit 3 hierbei in ihre Stangenklemmposition 3k vorgespannt am Stangenkoppelteil 1 geführt. Dazu dient im gezeigten Beispiel eine in den Fig. 2 und 6 angedeutet zu erkennende Vorspannfederanordnung 14, die sich einerseits an der Klemmeinheit 3 und andererseits am Grundkörper 2 des Stangenkoppelteils 1 abstützt und beispielsweise aus einer oder mehreren Vorspannfedern bestehen kann.

Die Bedieneinheit 4 ist am Objekthalteteil 5 angeordnet und zum nutzerbetätigten Bewegen der Klemmeinheit 3 zwischen ihrer Stangenklemmposition 3k und ihrer Stangenfreigabeposition eingerichtet. Zu diesem Zweck ist sie spezieller dafür eingerichtet, die Klemmeinheit 3 sowohl dann, wenn sich der Objekthalteteil 5 der Haltevorrichtung in seiner ersten Drehstellung 5₁ befindet, als auch dann, wenn sich der Objekthalteteil 5 in seiner zweiten Drehstellung 5₂ befindet, nutzerbetätigt zwischen ihrer Stangenklemmposition und ihrer Stangenfreigabeposition zu bewegen.

Im gezeigten Beispiel handelt es sich bei der Haltevorrichtung um eine solche zum Halten eines Handbrausenkörpers üblicher Art, speziell um eine Haltevorrichtung 21, die an einer Stange 20 in Form einer wandmontierbaren sanitären Brausestange verschieblich montiert werden kann. Die Fig. 1 und 4 zeigen eine entsprechende sanitäre Handbrausenhalteeinrichtung mit wandmontierbarer sanitärer Brausestange 20 und an dieser verschieblich montierter Haltevorrichtung 21 in den zwei erwähnten, verschiedenen Montageorientierungen, wobei der Objekthalteteil 5 der Haltevorrichtung 21 in dieser Anwendung eine Handbrausenaufnahmeöffnung 22 zum haltenden Einsetzen eines Halteabschnitts eines sanitären Handbrausenkörpers aufweist. Für den nicht gezeigten Handbrausenkörper und dessen Halteabschnitt sind beliebige herkömmliche Bauformen verwendbar. Der Halteabschnitt kann z.B. aus einem kegelstumpfförmigen Schlauchanschlussabschnitt des Handbrausenkörpers bzw. eines daran angeschlossenen Brauseschlauchs bestehen, wobei die Form der Handbrausenaufnahmeöffnung 22 geeignet auf die Form des Halteabschnitts abgestellt ist, z.B. eine korrespondierend kegelstumpfförmige Öffnungsberandung aufweist.

In alternativen Anwendungen kann die Haltevorrichtung 21 in gleicher oder modifizierter Ausführung zur Montage an einer anderen, z.B. nicht-sanitären, Stange einem anderen, z.B. nicht-sanitären, Einsatzzweck dienen, bei dem ein Gegenstand mittels der Haltevorrichtung 21 lösbar klemmend an einer Stange verschieblich oder nicht verschieblich montiert werden soll. Dabei kann die Stange einen beliebigen Querschnitt aufweisen, wie einen kreisrunden, ovalen, polygonalen oder, wie im gezeigten Beispiel, trapezförmigen Querschnitt. Der Stangenhalteteil 1 weist eine Stangenaufnahme 19 auf, die in ihrer Form geeignet auf den Querschnitt der Stange abgestimmt ist, an der die Haltevorrichtung montiert werden soll, so dass die Stange zum Montieren der Haltevorrichtung in die Stangenaufnahme 19 eingefügt und bei Bedarf längs dieser verschoben werden kann. Es versteht sich, dass der Objekthalteteil 5 mit einem jeweils auf das zu haltende Objekt abgestimmten Objekthaltemittel versehen ist, bei dem es sich anstelle einer Aufnahmeöffnung, wie der Handbrausenaufnahmeöffnung 22, um ein beliebiges anderes herkömmliches Objekthaltemittel handeln kann, wie eine lösbare Clips-, Klemm- oder Schraubverbindung oder dergleichen.

In vorteilhaften Ausführungsformen beträgt, wie im gezeigten Beispiel, der Drehwinkelabstand zwischen der ersten Drehstellung 5₁ und der zweiten Drehstellung 5₂ des Objekthalteteils 5 mindestens 90°. Die Fig. 1 zeigt die Haltevorrichtung 21 in der ersten Drehstellung 5₁ des Objekthalteteils 5, die Fig. 4 zeigt die Haltevorrichtung 21 in der zweiten Drehstellung 5₂ des Objekthalteteils 5. Genauer gesagt, repräsentiert Fig. 1 die Montage der Haltevorrichtung 21 an der Stange 20 in einer vertikalen Orientierung der Stange 20, während Fig. 4 die Montage der Haltevorrichtung 21 an der Stange 20 in einer horizontalen Orientierung der Stange 20 repräsentiert. Entsprechend der um 90° gedrehten Orientierung der Stange 20 ist auch der Stangenkoppelteil 1 der Haltevorrichtung 21 in den beiden Orientierungen der Fig. 1 und 4 räumlich um 90° versetzt orientiert, während die Fig. 1 und 4 den Objekthalteteil 5 in gleicher räumlicher Orientierung mit schräg nach oben weisender Handbrausenaufnahmeöffnung 22 zeigen. Dazu ist der Objekthalteteil 5 gegenüber dem Stangenkoppelteil 1 in der Montagesituation von Fig. 4 gegenüber der Montagesituation von Fig. 1 um 90° verdreht. Bei Bedarf kann in entsprechenden Realisierungen der Haltevorrichtung 21 der Objekthalteteil 5 auch in Drehstellungen, die zwischen der ersten und zweiten Drehstellung 5₁, 5₂ liegen oder die von der ersten Drehstellung 5₁ einen Drehwinkelabstand von mehr als 90° haben, gegenüber dem Stangenkoppelteil 1 gedreht orientiert sein. Die Verdrehung des Objekthalteteils 5 gegenüber dem Stangenkoppelteil 1 erfolgt um eine Drehachse D_{A}, die im gezeigten Beispiel durch die Bolzenachse eines Haltebolzens 15 gegeben ist, mit dem der Objekthalteteil 5 drehbeweglich am Grundkörper 2 des Stangenkoppelteils 1 gehalten ist. Zur verbesserten Führung aneinander und insbesondere zur verbesserten Drehführung können der Grundkörper 2 und der Objekthalteteil 5, wie im gezeigten Beispiel, jeweils eine stutzenförmig abstehende Bolzendurchführungshülse 16, 17 aufweisen, wie insbesondere aus Fig. 5 bzw. aus Fig. 7, die den Objekthalteteil 5 separat zeigt, zu erkennen. Die Bolzendurchführungshülsen 16, 17 greifen ineinander, und der Haltebolzen 15 erstreckt sich durch diese hindurch.

In vorteilhaften Ausführungen ist, wie beim gezeigten Beispiel, die Bewegung der Klemmeinheit 3 zwischen ihrer Stangenklemmposition 3k und ihrer Stangenfreigabeposition eine lineare Translationsbewegung T_{K}, in den Schnittansichten der Fig. 2, 3 und 6 eine Bewegung nach oben bzw. unten, wobei die Haltevorrichtung in allen Darstellungen in ihrer Stangenklemmposition 3k gezeigt ist. In speziellerer Realisierung verläuft die lineare Translationsbewegung T_{K} der Klemmeinheit 3 senkrecht zu einer Längsrichtung L_{SA} der am Stangenkoppelteil 1 der Haltevorrichtung zum Aufnehmen der jeweiligen Stange ausgebildeten Stangenaufnahme 19, oder jedenfalls mit bezüglich dieser Stangenaufnahme-Längsrichtung L_{SA} senkrechter Hauptrichtungskomponente, d.h. mit größerer Richtungskomponente in dieser Stangenaufnahme-Längsrichtung L_{SA} als in der Richtung senkrecht dazu. Zusätzlich oder alternativ verläuft die lineare Klemmeinheit-Translationsbewegung T_{K} parallel oder jedenfalls mit paralleler Hauptrichtungskomponente bezüglich der Drehachse D_{A} des Objekthalteteils 5, wie dies beim gezeigten Beispiel der Fall ist.

In vorteilhaften Ausführungen beinhaltet die Klemmeinheit 3, wie beim gezeigten Beispiel, zwei sich quer zur linearen Klemmeinheit-Translationsbewegung T_{K} gegenüberliegende Klemmbacken 8, 9, die zwischen sich die Stangenaufnahme 19 belassen. Dabei liegen sich die beiden Klemmbacken 8, 9 an einander zugewandten Endbereichen 8a, 9a mit einem Abstand gegenüber, der in diesem Bereich eine entsprechende Weite Ws der Stangenaufnahme 19 definiert. Dieser Klemmbackenabstand bzw. diese Weite Ws der Stangenaufnahme 19 nimmt in Richtung aus der Stangenaufnahme 19 heraus ab, wie z.B. aus Fig. 3 ersichtlich, in der diese Weite Ws von einem größeren Wert W_{S1} an einer Innenkante der einander zugewandten Klemmbacken-Endbereiche 8a, 9a auf einen demgegenüber kleineren Wert W_{S2} an einer Außenkante der Klemmbacken-Endbereiche 8a, 9a abnimmt. Dies ermöglicht ein quasi hintergreifendes Festklemmen des Stangenkoppelteils 1 und damit der Haltevorrichtung insgesamt an der jeweiligen Stange. Im gezeigten Beispiel ist dies dadurch realisiert, dass die einander zugewandten Klemmbacken-Endbereiche 8a, 9a als entsprechende Schrägflächen ausgebildet sind, wie insbesondere aus den Fig. 2, 3 und 6 ersichtlich.

Diese Art der lösbaren Klemmung der Haltevorrichtung an der Stange eignet sich beispielsweise gut zur Klemmmontage der Haltevorrichtung an einer Stange mit trapezförmigem Querschnitt, wie im Fall der gezeigten Stange 20. Sie eignet sich jedoch auch zur Verwendung bei anderen Stangenquerschnitten, z.B. kreisförmigen, elliptischen oder polygonalen Stangenquerschnitten. Bei Bedarf kann die Klemmverbindung zwischen der Haltevorrichtung und der Stange durch eine spezielle kraftschlüssige und/oder formschlüssige Gestaltung der klemmend zusammenwirkenden Flächen von Haltevorrichtung und/oder Stange unterstützt werden. Im gezeigten Beispiel ist hierzu an Seitenflanken der Stange 20 eine z.B. sägezahnförmige Profilierung 17 vorgesehen, mit der korrespondierende Profilierungen der einander zugewandten Endbereiche 8a, 9a der Klemmbacken 8, 9 zusammenwirken, um die Haltevorrichtung gegen Verschieben längs der Stange 20 gesichert an der Stange 20 festzuhalten. Dazu greifen die Profilierungen an den Klemmbacken-Endbereichen 8a, 9a rastend in die Profilierung 17 der Seitenflanken der Stange 20 ein, wenn die Klemmeinheit 3 in ihre Stangenklemmposition 3k bewegt wird. Durch Rückbewegen der Klemmeinheit 3 in ihre Stangenfreigabeposition in der entgegengesetzten linearen Translationsbewegung ihrer Klemmbacken 8, 9, in den Figuren 2, 3, 4 und 6 nach oben bzw. in Fig. 1 nach links, rasten die Profilierungen an den Klemmbacken-Endbereichen 8a, 9a wieder aus der Profilierung 17 der Stangenseitenflanken aus, so dass die Haltevorrichtung 21 längs der Stange 20 verschoben werden kann. Zusätzlich oder anstelle dieser formschlüssigen Kopplung kann eine kraftschlüssige Kopplung z.B. durch einen entsprechenden Reibschlusskontakt zwischen der Klemmeinheit 3 bzw. deren Klemmbacken-Endbereichen 8a, 9a einerseits und der Stange 20 andererseits vorgesehen sein.

In vorteilhaften Ausführungsformen der Haltevorrichtung beinhaltet die Bedieneinheit 4, wie im gezeigten Beispiel, mindestens ein Betätigungsglied 6, an das die Klemmeinheit 3 über eine mechanische Kopplung gekoppelt ist. Dabei ist das Betätigungsglied 6 am Objekthalteteil 5 zwischen einer klemmaktiven Ruheposition Kp und einer nicht explizit gezeigten, klemmlösenden Betätigungsposition beweglich geführt. in der klemmaktiven Ruheposition Kp belässt das Betätigungsglied 6 die Klemmeinheit 3 in ihrer Stangenklemmposition 3k, während sie in ihrer klemmlösenden Betätigungsposition die Klemmeinheit 3 in ihre Stangenfreigabeposition betätigt. Mit anderen Worten kann der Benutzer an der Bedieneinheit 4 das Betätigungsglied 6 von seiner Ruheposition Kp in seine Betätigungsposition betätigen, um die Klemmeinheit 3 von ihrer Stangenklemmposition 3k in ihre Stangenfreigabeposition zu bewegen. Im gezeigten Beispiel umfasst die Bedieneinheit zwei Betätigungsglieder 6₁, 6₂, die der Benutzer einzeln oder gemeinsam betätigen kann, um die Klemmeinheit 3 in gewünschter Weise zwischen ihrer Stangenfreigabeposition und ihrer Stangenklemmposition 3k zu bewegen. Fig. 6 zeigt speziell die Klemmeinheit 3, die Stange 20 und die Betätigungsglieder 6₁, 6₂, und Fig. 8 zeigt speziell die Klemmeinheit 3 und die Betätigungsglieder 6₁, 6₂.

Das jeweilige Betätigungsglied 6 bzw. 6₁, 6₂ kann optional, wie im gezeigten Beispiel, mittels eines zugeordneten Vorspannelements 12, wie einer Vorspann- bzw. Rückstellfeder, in seine Ruheposition Kp elastisch vorgespannt gehalten sein. Der Benutzer kann in diesem Fall das jeweilige Betätigungsglied 6 bzw. 6₁, 6₂ unter Überwindung der Rückstellkraft von seiner Ruheposition Kp in seine Betätigungsposition verbringen, um die Klemmung der Klemmeinheit aufzuheben, und nach Loslassen der Bedieneinheit 4 durch den Benutzer kehrt das jeweilige Betätigungsglied 6 selbsttätig wieder in seine Ruheposition Kp zurück, wodurch die Klemmeinheit 3 wieder ihre Stangenklemmposition 3k einnehmen kann.

In vorteilhaften Ausführungen ist das Betätigungsglied 6 bzw. sind die Betätigungsglieder 6₁, 6₂, wie beim gezeigten Beispiel, in einer linearen Translationsbewegung T_{B} zwischen der klemmaktiven Ruheposition K_{P} und der klemmlösenden Betätigungsposition beweglich, wobei die Betätigungsglied-Translationsbewegung T_{B} bezüglich der Translationsbewegung T_{K} der Klemmeinheit 3 mit senkrechter Hauptrichtungskomponente verläuft, im gezeigten Beispiel sind die besagten Translationsbewegungen T_{B}, T_{K} speziell senkrecht zueinander. Dabei beinhaltet die mechanische Kopplung von Betätigungsglied 6 und Klemmeinheit 3 eine Schrägflächenkopplung mit einer Betätigungsglied-Koppelfläche 6_{K} am Betätigungsglied 6 und einer mit dieser zusammenwirkenden Klemmeinheit-Koppelfläche 3k an der Klemmeinheit 3, wobei zumindest eine der beiden Koppelflächen 3_{K}, 6_{K} als Schrägfläche ausgebildet ist. Im gezeigten Beispiel sind beide Koppelflächen 3_{K}, 6_{K} an der Klemmeinheit 3 einerseits und am Betätigungsglied 6 andererseits jeweils als Schrägfläche ausgebildet, wie insbesondere aus den Fig. 3 und 6 ersichtlich.

In entsprechenden Realisierungen umfasst die Klemmeinheit-Koppelfläche 3_{K}, wie im gezeigten Beispiel, mindestens einen ersten und einen zweiten Klemmeinheit-Koppelflächenabschnitt 3_{K1}, 3_{K2} an der Klemmeinheit 3. Dabei wirkt die Betätigungsglied-Koppelfläche 6_{K} mit dem ersten Klemmeinheit-Koppelflächenabschnitt 3_{K1} zusammen, wenn sich der Objekthalteteil 5 in der ersten Drehstellung 5₁ befindet. Wenn sich der Objekthalteteil 5 in der zweiten Drehstellung 5₂ befindet, wirkt die Betätigungsglied-Koppelfläche 6_{K} mit dem zweiten Klemmeinheit-Koppelflächenabschnitt 3_{K2} zusammen. Im gezeigten Beispiel sind die ersten und einen zweiten Klemmeinheit-Koppelflächenabschnitte 3_{K1}, 3_{K2} gegeneinander um 90° versetzt angeordnet, wie aus Fig. 8 ersichtlich, angepasst an den entsprechenden Drehwinkelabstand der ersten und zweiten Drehstellung 5₁, 5₂.

In einer vorteilhaften Realisierung ist die Klemmeinheit-Koppelfläche 3_{K}, wie beim gezeigten Beispiel, als eine um die Drehachse D_{A} des Objekthalteteils 5 umlaufende Schrägfläche gebildet, wie ebenfalls aus Fig. 8 ersichtlich, wobei der erste und der zweite Klemmeinheit-Koppelflächenabschnitt 3_{K1}, 3_{K2} einteiliger Bestandteil dieser umlaufenden Klemmeinheit-Schrägfläche sind.

In vorteilhaften Ausführungen umfasst die Bedieneinheit 4 mindestens zwei sich bezüglich der Drehachse D_{A} des Objekthalteteils 5 gegenüberliegende Betätigungsglieder, wie dies bei den genannten Betätigungsgliedern 6₁, 6₂ im gezeigten Beispiel der Fall ist, sowie eine jeweils zugehörige Drucktaste 10, 11. Die jeweilige Drucktaste 10, 11 ist im gezeigten Beispiel mit dem zugeordneten Betätigungsglied 6₁, 6₂ einteilig gebildet und auf diese Weise inhärent mit diesem gekoppelt. In alternativen Ausführungen sind die Drucktasten 10, 11 als von den Betätigungsgliedern 6₁, 6₂ separate Bauteile gebildet und mit diesen mechanisch starr gekoppelt, z.B. durch eine entsprechende feste Verbindung wie eine Schraubverbindung, Klebeverbindung oder dergleichen. Im gezeigten Beispiel sind die Drucktasten 10, 11 mittels Rastnasen 18a verrastet am Objekthalteteil 5 gehalten, wobei die Rastnasen 18a mit am Objekthalteteil 5 ausgebildeten Rastanschlägen 18b zusammenwirken, wie insbesondere aus Fig. 7 ersichtlich. Dabei begrenzen die Rastanschläge 18b die Drucktasten 10, 11 und damit die mit ihnen einteiligen Betätigungsglieder 6₁, 6₂ in ihrer Translationsbewegung entgegen der Betätigungsposition und definieren dadurch die Ruheposition K_{P}, in welche die Betätigungsglieder 6₁, 6₂ und die Drucktasten 10, 11 durch das oder die Vorspannelemente 12 elastisch vorgespannt sind.

In vorteilhaften Ausführungen umfasst die Haltevorrichtung, wie im gezeigten Beispiel, eine Rastkopplung 7 zwischen dem Objekthalteteil 5 und dem Stangenkoppelteil 1, durch die der Objekthalteteil 5 zumindest in der ersten und in der zweiten Drehstellung 5₁, 5₂ in Drehrichtung ausrastbar rastend mit dem Stangenkoppelteil 1 gekoppelt ist. Dies sichert den Objekthalteteil 5 in seiner jeweiligen Drehstellung vor einem unabsichtlichen Verdrehen gegenüber dem Stangenkoppelteil 1. Andererseits kann der Benutzer einfach unter Überwindung der betreffenden Rastkraft den Objekthalteteil 5 aus seiner momentanen Drehstellung heraus in eine andere Drehstellung gegenüber dem Stangenkoppelteil 1 verdrehen, in der dann der Objekthalteteil 5 wieder einrastend gesichert gehalten werden kann.

Im gezeigten Beispiel ist die Rastkopplung 7 dadurch realisiert, dass am Objekthalteteil 5 eine kreisförmig umlaufende Rastführungsbahn 13 ausgebildet ist, die an geeigneten Stellen mit halbkreisförmigen Rastausnehmungen versehen ist, im gezeigten Beispiel vier in Fig. 7 zu erkennende Rastausnehmungen 7a, und gegen die sich ein oder mehrere Raststifte, im gezeigten Beispiel zwei in Fig. 5 zu erkennende Raststifte7b, mit halbkugelförmigem Ende federelastisch vorgespannt andrücken, wobei sich die Raststifte 7b am Stangenkoppelteil 1 bzw. dessen Grundkörper 2 abstützen. Die Raststifte 7b sind insbesondere in Fig. 5 zu erkennen, die speziell den Grundkörper 2 des Stangenhalteteils 1 zeigt. Immer dann, wenn sich der Objekthalteteil 5 in einer gewünschten Drehstellung befindet, greifen der oder die Raststifte 7b rastend in die Rastausnehmungen 7a ein. Wenn der Benutzer den Objekthalteteil 5 dreht, drehen sich die Rastausnehmungen 7a von den Raststiften 7b weg, und die Raststifte 7b werden durch die Rastführungsbahn 13 aus den Rastausnehmungen 7a heraus zurückgedrückt.

Wie das gezeigte und die weiteren oben erläuterten Ausführungsbeispiele deutlich machen, stellt die Erfindung eine an einer Stange montierbare Haltevorrichtung zur Verfügung, die sich zur Montage an einer jeweiligen Stange in unterschiedlichen Lageorientierungen seines Objekthalteteils relativ zu seinem Stangenkoppelteil eignet und bei der in vorteilhafter Weise die Bedieneinheit zur Nutzerbetätigung der Klemmeinheit am Objekthalteteil angeordnet ist. Die Haltevorrichtung ist insbesondere zum Halten von Handbrausenkörpern an sanitären, wandmontierbaren Duschstangen geeignet, sie ist jedoch in gleicher Weise auch für andere, ähnliche sanitäre und nicht-sanitäre Anwendungen verwendbar, bei denen Bedarf daran besteht, einen Gegenstand lösbar und ggf. verschieblich an einer Stange anbringen zu können.

## Patentansprüche

1. Stangenmontierbare Haltevorrichtung mit
- einem Stangenkoppelteil (1), der zum Anbringen an einer Stange eingerichtet ist und einen Grundkörper (2) sowie eine zwischen einer Stangenklemmposition (3k) und einer Stangenfreigabeposition am Grundkörper beweglich geführte Klemmeinheit (3) aufweist,
- einer Bedieneinheit (4) zum nutzerbetätigten Bewegen der Klemmeinheit zwischen ihrer Stangenklemmposition und ihrer Stangenfreigabeposition und
- einem Objekthalteteil (5), der mindestens zwischen einer ersten Drehstellung (5₁) und einer zweiten Drehstellung (5₂) drehbeweglich mit dem Stangenkoppelteil verbunden ist,
**dadurch gekennzeichnet, dass**
- die Bedieneinheit (4) am Objekthalteteil (5) angeordnet ist und dafür eingerichtet ist, die Klemmeinheit (3) sowohl bei in seiner ersten Drehstellung (5₁) befindlichem Objekthalteteil als auch bei in seiner zweiten Drehstellung (5₂) befindlichem Objekthalteteil nutzerbetätigt zwischen ihrer Stangenklemmposition (3k) und ihrer Stangenfreigabeposition zu bewegen.

2. Stangenmontierbare Haltevorrichtung nach Anspruch 1, weiter **dadurch gekennzeichnet, dass** die erste und die zweite Drehstellung des Objekthalteteils einen Drehwinkelabstand von mindestens 90° voneinander haben.

3. Stangenmontierbare Haltevorrichtung nach Anspruch 1 oder 2, weiter **dadurch gekennzeichnet, dass** die Bewegung der Klemmeinheit zwischen ihrer Stangenklemmposition und ihrer Stangenfreigabeposition eine lineare Klemmeinheit-Translationsbewegung (T_{K}) ist, die bezüglich einer Stangenaufnahme-Längsrichtung (L_{SA}) des Stangenkoppelteils mit senkrechter Hauptrichtungskomponente und/oder bezüglich einer Drehachse (D_{A}) des Objekthalteteils mit paralleler Hauptrichtungskomponente verläuft.

4. Stangenmontierbare Haltevorrichtung nach Anspruch 3, weiter **dadurch gekennzeichnet, dass** die Klemmeinheit zwei sich quer zur linearen Klemmeinheit-Translationsbewegung gegenüberliegende Klemmbacken (8, 9) aufweist, die zwischen sich eine Stangenaufnahme (19) belassen, wobei eine an einander zugewandten Endbereichen (8a, 9a) der Klemmbacken durch deren Abstand voneinander definierte Weite (Ws) der Stangenaufnahme in Richtung aus der Stangenaufnahme heraus abnimmt.

5. Stangenmontierbare Haltevorrichtung nach einem der Ansprüche 1 bis 4, weiter **dadurch gekennzeichnet, dass** die Bedieneinheit mindestens ein Betätigungsglied (6) aufweist, an das die Klemmeinheit über eine mechanische Kopplung gekoppelt ist und das am Objekthalteteil zwischen einer klemmaktiven Ruheposition (K_{P}), in der es die Klemmeinheit in ihrer Stangenklemmposition belässt, und einer klemmlösenden Betätigungsposition, in der es die Klemmeinheit in ihre Stangenfreigabeposition betätigt, beweglich geführt ist.

6. Stangenmontierbare Haltevorrichtung nach Anspruch 5, weiter **dadurch gekennzeichnet, dass** das Betätigungsglied in einer linearen Translationsbewegung (T_{B}) zwischen seiner klemmaktiven Ruheposition und seiner klemmlösenden Betätigungsposition beweglich ist, wobei die Betätigungsglied-Translationsbewegung bezüglich der Klemmeinheit-Translationsbewegung mit senkrechter Hauptrichtungskomponente verläuft und die mechanische Kopplung eine Schrägflächenkopplung mit einer Betätigungsglied-Koppelfläche (6_{K}) am Betätigungsglied und einer mit dieser zusammenwirkenden Klemmeinheit-Koppelfläche (3_{K}) an der Klemmeinheit beinhaltet, wobei die Betätigungsglied-Koppelfläche eine Betätigungsglied-Schrägfläche (6s) ist und/oder die Klemmeinheit-Koppelfläche eine Klemmeinheit-Schrägfläche (3s) ist.

7. Stangenmontierbare Haltevorrichtung nach Anspruch 6, weiter **dadurch gekennzeichnet, dass** die Klemmeinheit-Koppelfläche mindestens einen ersten und einen zweiten Klemmeinheit-Koppelflächenabschnitt (3_{K1}, 3_{K2}) an der Klemmeinheit aufweist, wobei die Betätigungsglied-Koppelfläche in der ersten Drehstellung des Objekthalteteils mit dem ersten Klemmeinheit-Koppelflächenabschnitt zusammenwirkt und in der zweiten Drehstellung des Objekthalteteils mit dem zweiten Klemmeinheit-Koppelflächenabschnitt zusammenwirkt.

8. Stangenmontierbare Haltevorrichtung nach Anspruch 7, weiter **dadurch gekennzeichnet, dass** die Klemmeinheit-Koppelfläche als eine um eine Drehachse (D_{A}) des Objekthalteteils umlaufende Klemmeinheit-Schrägfläche gebildet ist, wobei der erste und der zweite Klemmeinheit-Koppelflächenabschnitt einteilige Bestandteile der umlaufenden Klemmeinheit-Schrägfläche sind.

9. Stangenmontierbare Haltevorrichtung nach einem der Ansprüche 5 bis 8, weiter **dadurch gekennzeichnet, dass** die Bedieneinheit mindestens zwei sich bezüglich der Drehachse des Objekthalteteils gegenüberliegende Betätigungsglieder (6₁, 6₂) und eine jeweils zugehörige Drucktaste (10, 11) umfasst, die mit dem zugeordneten Betätigungsglied einteilig oder mit diesem mechanisch starr gekoppelt ist.

10. Stangenmontierbare Haltevorrichtung nach einem der Ansprüche 1 bis 9, weiter **gekennzeichnet durch** eine Rastkopplung (7) zwischen dem Objekthalteteil und dem Stangenkoppelteil, durch die der Objekthalteteil in der ersten und in der zweiten Drehstellung in Drehrichtung ausrastbar rastend mit dem Stangenkoppelteil gekoppelt ist.

11. Sanitäre Handbrausenhalteeinrichtung mit
- einer wandmontierbaren sanitären Brausestange (20) und
- einer an der Brausestange verschieblich montierbaren Haltevorrichtung (21) nach einem der Ansprüche 1 bis 10, wobei der Objekthalteteil der Haltevorrichtung eine Handbrausenaufnahmeöffnung (22) zum haltenden Einsetzen eines Halteabschnitts einer sanitären Handbrausenkörpers aufweist.
